# EUROPEAN PATENT APPLICATION

(11) **EP 0 892 327 A1**
(43) Date of publication of application: **20.01.1999**
(21) Application number: 98113203.8
(22) Date of filing: 15.07.1998
(51) Int. Cl.: G05B 23/02

(54) **Method and apparatus for monitoring and controlling real-time information in a building automation system**

(30) Priority: 17.07.1997 US 895801
(71) Applicant: LANDIS & STAEFA, INC., Buffalo Grove, Illinois 60089-4513 (US)
(72) Inventor: Han, James K., Naperville, Illinois 60540 (US); Ramirez, Pete, Glen Ellyn, Illinois 60137 (US)
(74) Representative: Modiano, Guido, Dr.-Ing.

(57) **Abstract**

The building automation control system of the present invention includes a supervisory control station for monitoring and controlling process information (control points) from at least one environmental control device. The supervisory control station is provided with a memory for storing data, including a dynamic link library (DLL) containing: first data for displaying a plurality of independently selectable graphic objects, and link data specifying an association between a selected graphic object and the control point. The supervisory control station dynamically displays the received real-time process state information for the associated control point using stored state table data, link data, and run time values from the environmental control device.

## Description

### BACKGROUND OF THE INVENTION

The present invention relates to a method and apparatus for monitoring and controlling real-time information in a building automation system. More specifically, the present invention discloses a flexible, modular apparatus for dynamically displaying real-time process information. The present invention also discloses a uniform approach by which one section of code can access the services of another section of code, thereby promoting reuse of code and ease of maintenance.

Conventional systems for monitoring and controlling graphical displays are inflexible and utilize graphical controls or images which are rigidly linked or associated with specific control points during the coding of the user interface. In this context, a control point is a physical point connected to a sensor or apparatus such as an environmental control device which can either be monitored or commanded. Because the linkage or association is coded into the interface, these prior art systems are inflexible, and the subsequent addition of further control points requires significant program modifications. This inflexibility is a serious drawback which adds to the cost of upgrading a building automation system.

An additional drawback associated with prior art graphical display systems is that the various attributes associated with these graphical controls or images are fixed. Thus, changes to the size of a control, font, scale or the like could only be achieved by modifying and recompiling the underlying program. From a user perspective, this inflexibility is highly undesirable.

An additional drawback associated with prior art graphical display systems relates to the manner in which these systems access the software services provided by another piece of software, application, or library. A conventional graphical monitoring application would link to a library and then access the library's services by calling the functions in the library. Alternatively, the graphical display application would use the services provided by another application, which runs in an entirely separate process. In this scenario, the two local processes would communicate using an inter-process communication mechanism, which requires a protocol between the two applications (a set of messages allowing one application to specify its requests and the other to respond appropriately). In yet another scenario, the graphical display application uses the services provided by the operating system, i.e., the application makes a series of system calls, each of which is handled by the operating system.

Due to the lack of any standard approach for sharing services, a conventional graphical monitoring application may include any number of these different approaches to access the services provided by another. In turn, the use of these disparate approaches inhibits the reuse of code sections and makes it difficult to maintain the software. Thus, a single, uniform approach was needed for providing one code section with access to the services of another.

### SUMMARY OF THE INVENTION

Accordingly, in response to the problems discussed above, one object of the present invention is to provide an improved building automation control system that has a set of flexible, modular controls that enables a user to add, change or delete an association or link between a graphic object and a control point without requiring modification and/or recompiling of the underlying programming.

Another object of the present invention is to provide such a system wherein a user can modify attributes associated with a graphic object without requiring modification and/or recompiling of the underlying programming.

Another object of the present invention is to provide such a system that includes a graphical monitoring application including a uniform approach by which one section of software supplies its services to another section of software, thus promoting reuse of code sections, ease of development and maintenance of the software.

These and other objects of the present invention will be apparent from the following detailed description of the invention, while referring to the attached drawings.

### DESCRIPTIONS OF THE DRAWINGS

FIGURE 1 illustrates a graphical application control object according to the present invention;
FIG. 2 illustrates a client with an interface to a needle gauge control object;
FIG. 3 shows a standard model used to access services provided by various kinds of software according to the present invention;
FIG. 4 shows an example of reusing an object through containment according to the present invention;
FIG. 5 shows a user interface for modifying properties of a control;
FIG. 6 illustrates a flow diagram for modifying the properties of a control;
FIG. 7 illustrates an Associated Point Control;
FIG. 8 illustrates a flow diagram of a method of associating a graphical object with a control point according to a first embodiment of the present invention;
FIG. 9 illustrates an operator interface for entering a point name to be associated with a graphic object;
FIG. 10 illustrates an operator interface for entering a state information for a control point name to be associated with a graphic object;
FIG. 11 illustrates a diagram showing data and command flows for creating a dynamic control overlaid on a static background picture;
FIG. 12 illustrates a Needle Gauge Control;
FIG. 13 illustrates an Analog Bar Control;
FIG. 14 illustrates a Point Information Block;
FIG. 15 illustrates a flow diagram for creating a dynamic control according to the second embodiment of the present invention;
FIG. 16 illustrates an operator interface for specifying style information for an analog bar control; and
FIG. 17 illustrates an operator interface for specifying a style information for an Information Block Control.

### DETAILED DESCRIPTION OF THE PREFERRED EMBODIMENTS

Broadly stated, the above objects are met or exceeded by the present modular graphical display method for monitoring real-time information in a building automation system. According to the method of the present invention the user selects a graphic object to be displayed from among a plurality of independent graphic objects, and links the selected object with a control point. Next, the user defines a normal state and at least one alarm state for the associated control point, and assigns state characteristics corresponding to each of the defined states. Finally, the state of the control point is dynamically displayed on the supervisory control station using the alarm characteristics.

The above objects are also met or exceeded by the apparatus of the present invention for monitoring and controlling real-time information in a building automation system. Generally, in the preferred embodiment, the present invention is a building automation control system that includes a supervisory control station for monitoring and controlling process information (control points) received from at least one environmental control device. The supervisory control station preferably includes a CPU, communications apparatus for sending and receiving data to and from the environmental control device, a display for displaying graphical information, and an input unit. The supervisory control station receives real-time process state information for a selected control point from the environmental control device via the communications apparatus. Moreover, the real-time process state information is dynamically displayed using a control object. The supervisory control station is provided with a memory for storing data, including a dynamic link library (DLL) for each control object. The DLL for each control object contains first data for delining each of plural services as one or more object oriented linking and embedding (OLE) objects, each OLE object supporting one or more interfaces. In turn, each interface includes a number of methods, which are callable only by invoking the OLE object's interface. The DLL further contains second data for displaying at least one independently selectable graphical object, and link data specifying an association between a selected graphic object and the control point. The supervisory control station dynamically displays real-time process state information for the associated control point using stored state table data, link data, and run time values from the environmental control device.

According to the graphical application design architecture of the present invention, each section of software implements its services as one or more OLE objects, where OLE refers to the Microsoft Corp.'s object oriented linking and embedding language (OLE) and is a registered trademark of the Microsoft Corp. Each OLE object supports one or more interfaces, each of which in turn includes a number of methods. A method is a function or a procedure that performs a specific action and is callable by other sections of software using the object (the client of that object). The methods that make up each interface are related to one another in some predetermined manner. Clients can access the services provided by an OLE object only by invoking the methods in the object's interface, clients cannot directly access any of the object's data.

By manner of illustration, a needle gauge control according to the present invention is implemented as an OLE control object. This OLE control object supports an interface which includes methods such as SetMaxTickAngle, and GetMaxTickAngle, where SetMaxTickAngle is a method for defining a maximum tick angle, i.e., the maximum displacement of the needle. In turn, GetMaxTickAngle is a method which returns the maximum tick angle as a parameter. If at a later date the object's developer desired to add support for zooming to this same object, the object would need to support another interface (perhaps with a single method such as ZoomIn) with an argument specifying the magnification factor. The methods in each interface collectively provide related services, such as angle displaying or access to zooming.

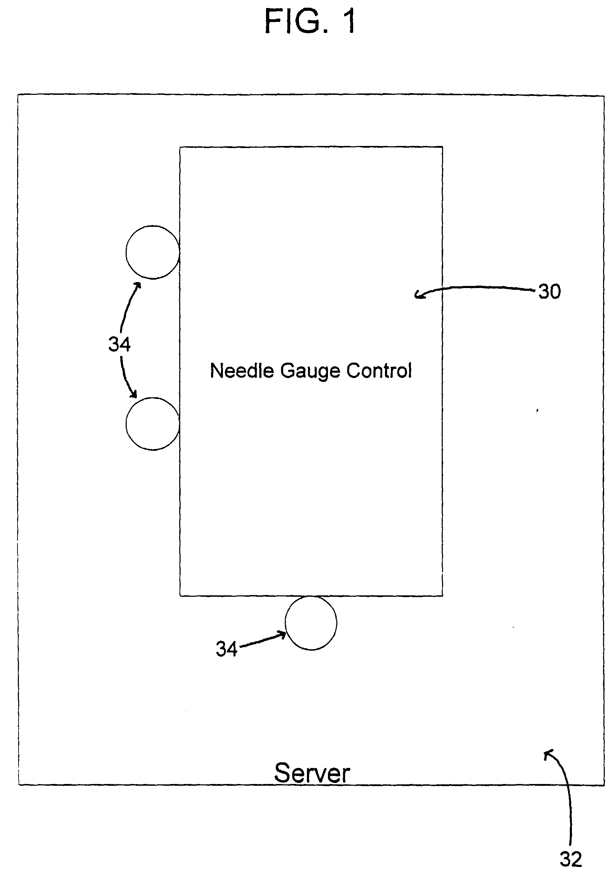

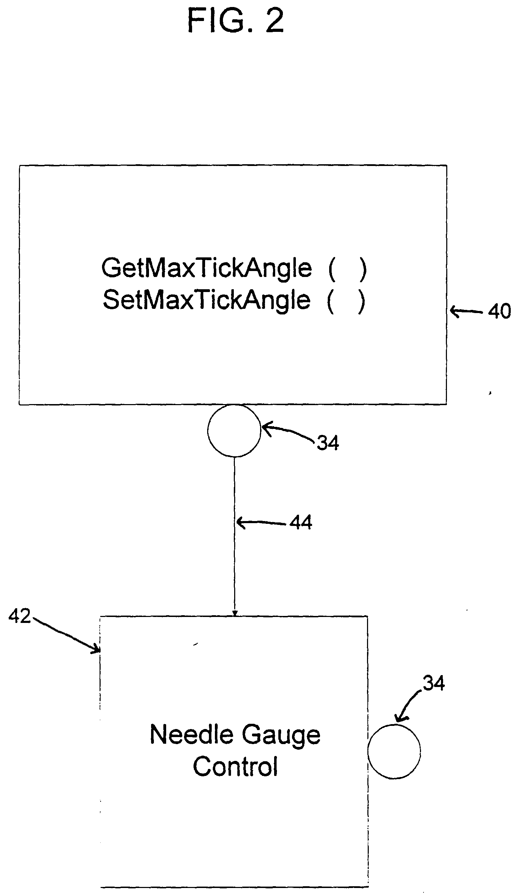

A graphical representation of an application control object is illustrated in FIG. 1. The object 30 is always implemented inside a server 32, shown as the rectangle around the object. This server can either be a dynamic-link library (DLL), which is loaded as needed when an application is running, or a separate process of its own. The object 30 is provided with several interfaces 34 which are used to invoke the methods in a graphical application control object's interface. An object typically provides its services through several other interfaces, and the client must have a separate pointer to each interface whose methods it plans to invoke. For example, a client of a needle gauge control object would need one interface pointer to invoke the methods in the object's tick angle interface and another pointer to invoke the method in the object's zooming interface. FIG. 2 shows a client 40 having two methods (SetMaxTickAngle, GetMaxTickAngle) and a needle gauge control object 42 with two interfaces 34. One of the interfaces 34 has a pointer 44 to the client 40, thereby enabling the needle gauge control object 42 to invoke the client's methods (SetMaxTickAngle, GetMaxTickAngle).

Every graphical application control object is an instance of a specific class. For example, one class may contain objects that provide monitoring functionality in a form of a needle gauge while another class may contain objects representing information in the form of an analog bar. Each class has a separate DLL containing all of the various data definitions used by the objects of that class.

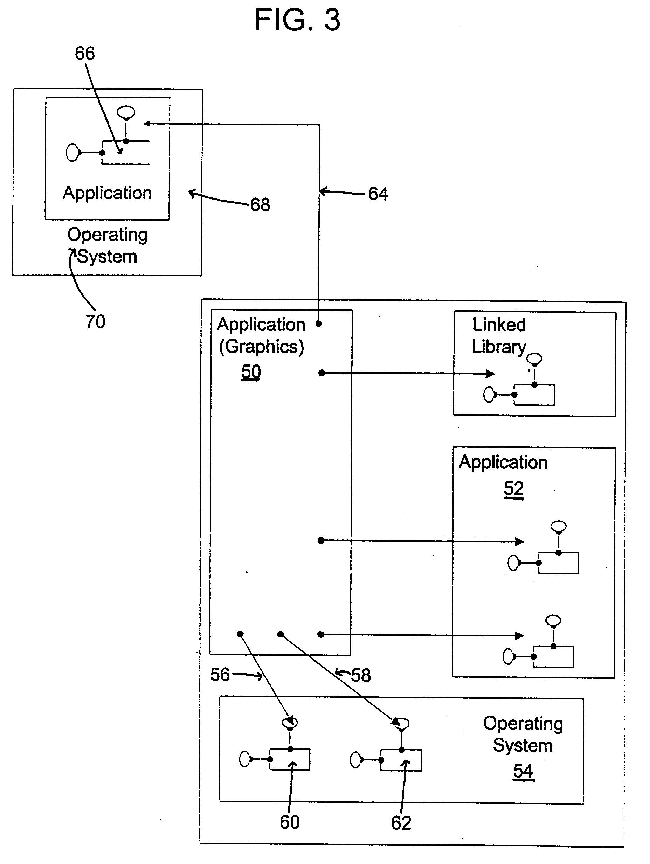

A graphical representation of the present model for providing shared access to various services is depicted in FIG. 3. Once a client has a pointer to the desired interface on a running object, it can start using the object's services simply by invoking the methods in the interface. From the programmer's perspective, invoking a method looks like invoking a local procedure or function whereas in fact, the actual code that is executed might be running in a library, a separate process, as part of the operating system, or even on an entirely different system. Thus, for example in FIG. 3, Applications 50 and 52 are both running on operating system 54. Application 50 has two pointers 56, 58 which point to methods 60, 62 respectively. Moreover, Application 50 has a pointer 64 to a method 66 in Application 68 which is running on operating system 70. Using the present graphical application design architecture, clients need not be aware of these distinctions because everything is accessed in the same manner.

One of the primary goals of the present invention is to provide a building automation control system utilizing an object oriented approach which incorporates an effective reuse of existing code. By allowing the creation of reusable components (graphical monitoring OLE controls) with well defined interfaces and methods, the new design architecture provides an infrastructure that makes this possible.

Conventional object oriented technologies rely on implementing inheritance (in which a new object inherits the actual implementation of methods in an existing object) as their fundamental mechanism for reusing existing code. This kind of inheritance is impractical for an object oriented system in a very heterogeneous programming environment because changes in base objects could have unexpected effects on objects that inherit implementation from them. For example, a situation in which a base object is either updated or released from memory independent of the objects which inherit from the base object, may cause unexpected results. In contrast, the present graphical display system does not rely on such inheritance, and instead provides for reuse through a concept termed containment.

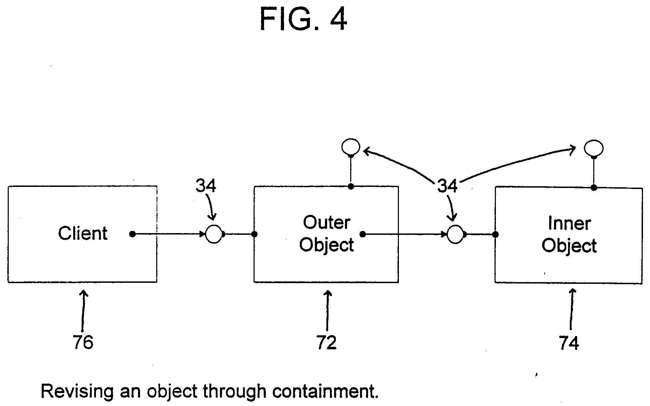

Containment in the present invention provides for reuse by relying on the relationship between objects. An outer object is one that reuses the services of an inner object. Thus, the the outer object simply acts as a client of the inner object. As shown in FIG. 4, the outer object 72 invokes the methods of an inner object 74 in order to carry out its own functions; however, the outer object 72 does not make those methods visible to its client 76. Instead, when the client 76 invokes a method in one of the outer object's interfaces 34, the execution of that method includes a call to a method in an interface 34 of the inner object 74. In other words, the outer object's interface contains methods that call the inner object's methods.

The use of control object is transparent to the end user, who only sees a typical graphical user interface displaying various buttons to click on, sliders to drag, text boxes to fill in, and so on. Most operating system such as Windows NT allow applications to present this kind of interface to the user. In the prior art or design architecture, the code necessary to display and work with these user interface features was an integrated part of the system or of a specific application. In contrast, according to the graphical application design architecture of the present invention, the user interface features are not an integrated part of the system. Therefore, the user interface may be designed separately or in parallel with the development of the control system. However, from the user perspective, the interface and the control system constitute a seamlessly integrated whole. Specifically, the user sees a control container that includes a number of OLE controls (such as the Analog Bar, Point Information Block, Needle Gauge, Hyperlink, and Associated Point control each of which will be described in detail below). A control container is analogous to an OLE compound documents container, but it supports a few extra interfaces for working with OLE controls. Each control is plugged into the container, and each commonly presents its own user interface as an embedded object supporting in-place activation. A slider on the screen, for example, can be used to command a specified output point to a new value simply by moving it along its axis. By moving the slider, the operator interacts with the code that actually triggers an OLE control object. The integrated user interface which the end user sees as a single application, is in fact a control container populated with various discrete monitoring OLE controls, each providing part of the complete solution.

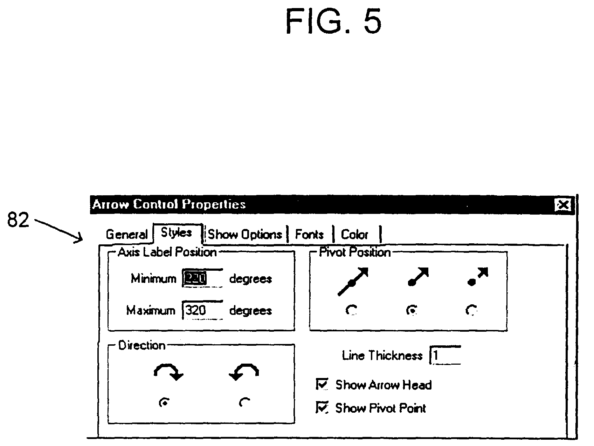

The container provides a direct, intuitive way for a user to examine and modify a control properties. By manner of illustration, FIG. 5 depicts a user interface 82 termed a Properties window which enables a user to directly view and modify a control's properties. However, not all control containers provide this kind of access. Moreover, rather than letting each control display provide its own idiosyncratic kind of user interface, the notion of property pages is used. With property pages, the properties of any control can be examined and modified in a standard way using a standard user interface. The Properties window interface 82 is intuitively easy to grasp, although fairly complex to design. Each page in the tabbed dialog box is provided by its own property page object. A styles property page is shown in FIG. 5.

A property page object is an OLE object, complete with its own class ID (CLSID) that supports the [PropertyPage interface. The CLSID is a 128-bit unique number which identifies a particular server implementation to OLE, and the IPropertyPage interface is a standard OLE interface which must be implemented in order for the object to be an OCX control.

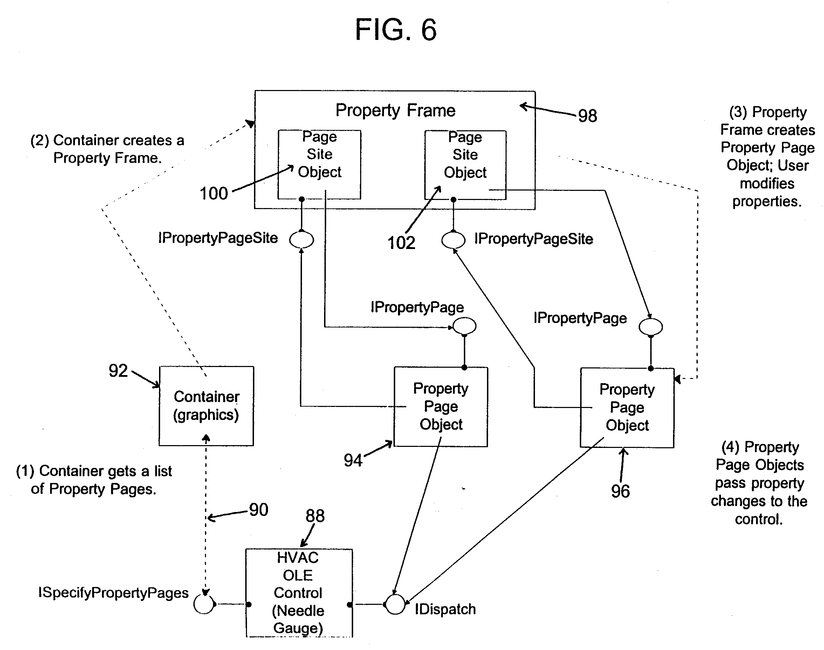

Interaction between a container and a control object will now be described with reference to FIG. 6. As shown, a control object 88 may implement an IspecifyPropertyPage interface (shown as dashed arrow 90) to allow its container 92 to learn about the property page objects 94, 96 it supports. When a user asks to see a control's properties, the control container 92 calls a method which in turn gets a list of CLSID's, one for each property page object the control supports.

Once the container 92 knows which property pages 94, 96 a control supports, the container 92 creates a property frame 98, which in turn activates an instance of each property page object using the CoCreateInstance method. For each property page object, the property frame provides a page site object 100, 102, each of which supports the [PropertyPage Site interface. Using this interface, a property page object can learn about the property frame that created it. Each property page object presents its page to the property frame, which assembles them into a tabbed dialog box like the one shown in FIG. 5.

Using this structure of objects, a user can directly examine or modify the control's properties. Any changes are communicated from the property frame to the property page objects via [PropertyPage and then by the property page objects directly back to the control itself through its [Dispatch interface. Moreover, a graphics control container may be equipped with properties to facilitate the integration of a control into the overall display environment, i.e., when a new control is inserted into the graphics container. For example, an inserted control may adopt the current background color, cause its own text to appear in the container's default font, or decide whether or not it should be in a dynamic (runtime) or edit mode.

To allow a control to learn about the environment in which it finds itself, the graphics control containers supports ambient properties, which include a default background color, default font, mode, and more. A control can learn about these properties via an IDispatch interface. Once it has obtained the values of its container's ambient properties, a control can modify its own properties to these values, allowing it to visually integrate with the other controls in the container.

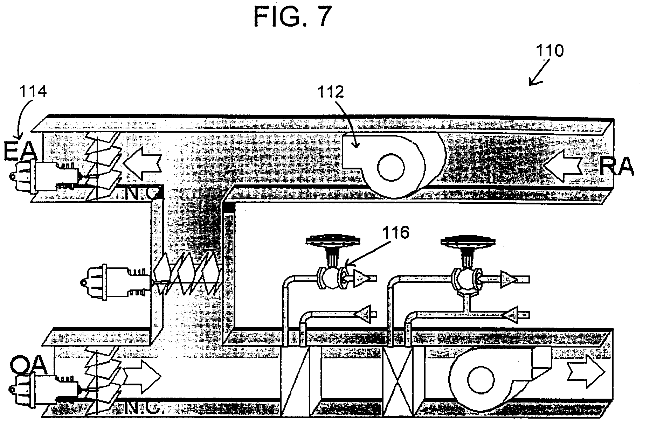

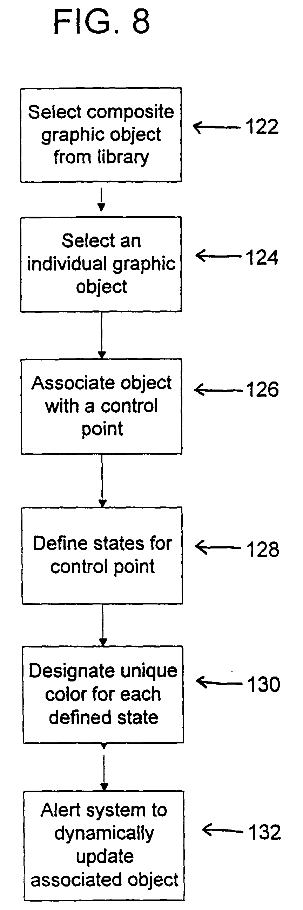

A method of monitoring a control point using an associated object control is explained with reference to FIGS. 7 - 9. In particular, FIG. 7 is a representative illustration of an associated object control, and FIG. 8 is a flow diagram for creating an associated object control according to the present invention.

An associated object control according to the present invention is a composite graphic including several independently selectable objects. The composite graphic depicts a system or a portion of a system in pictorial form, and dynamically displays state information in an intuitive manner. By manner of illustration, FIG. 7 shows a portion of an air handling system 110 in a building automation system, including several independently selectable objects, 112, 114, 116.

Using the method of the present invention, a user associates a selected object with a desired control point, and selects various style characteristics used to visually display the present state of the control point. This method is now explained with reference to FIG. 8.

First, a user selects a composite graphic from a library of stored composite graphics (block 122). Next, a user selects one of the independently selectable objects using, for example a keyboard, mouse, touch sensitive screen or other data entry method (block 124).

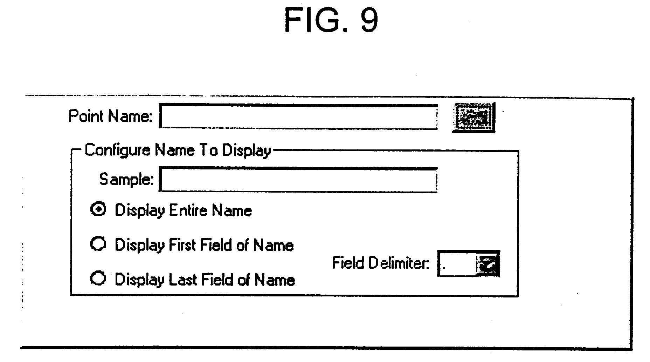

Then a user associates the selected object by entering in a control point or selecting a control point from a list of defined control points (block 126) An operator interface for entering or selecting a control point is shown, for example, in FIG 9. A point name according to the present invention is a string of alpha-numeric characters separated by one or more delimiters which hierarchically describe a unique point. Using the interface of FIG. 9, the user can elect to have the entire point name displayed Alternatively, the user can specific a delimiter and elect to have one of the first and last fields displayed.

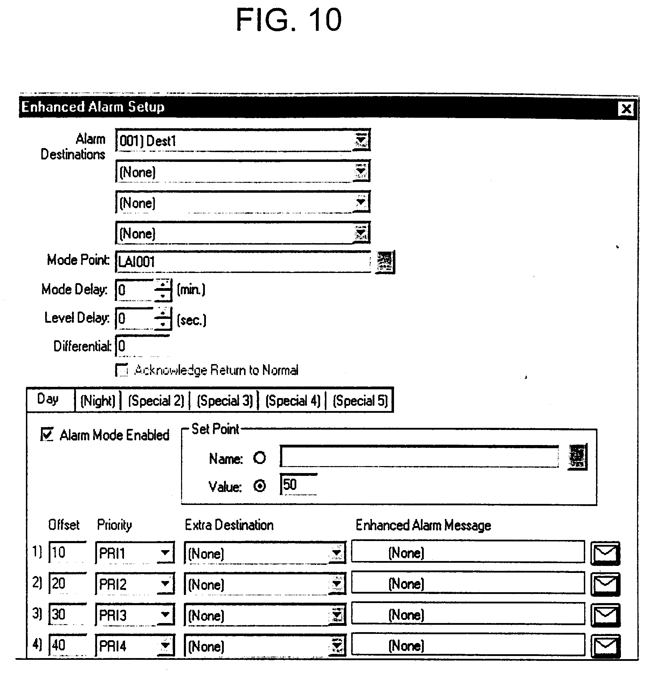

Referring again to FIG. 8, the user designates the state(s) for the associated control point by specifying a set point and one or more offsets (block 128). An operator interface for entering this information is shown, for example, in FIG 10. The set point designates the center point of the desired or normal state for the control point. A first alarm state is specified by entering an offset. For example, if for a given control point is 50 and a first offset is 10, then the normal state would encompass values ranging from 40 to 60. Any value falling outside of this range would trigger an alarm state. Moreover, the user elect to specify additional alarm states by entering additional offsets.

Referring again to FIG. 8, the user next selects the state colors used for displaying each of the states which the control point can assume (block 130). Thus, a normal state could, for example, be designated by the color green, and a first alarm state by the color orange.

Moreover, the user can elect to have the graphic object and/or the point name blink when the control point enters an alarm state. Finally, the user alerts the system that the state of the associated object should be dynamically updated by refreshing the displayed object in accordance with the specified state characteristics (block 132).

An important characteristic of the present invention is that the user can add, change or delete the link between a graphic object and a control point. This can be accomplished using the same procedure described for linking a object with a control point. Thus, the addition new control points to be monitored can be accomplished without requiring reprogramming of the supervisory control system.

Another important characteristic is that the display characteristics associated with each state can easily be customized to suit the individual preferences the user using the described operator interfaces.

According to another aspect of the present invention, the composite graphic can be overlaid over a static background picture. For example, a graphic representing an environmental control device can be overlaid over a static layout of the building. This feature facilitates the use of existing bit mapped graphics to provide the user with a graphic representation of the location of a control within a larger system, or provide an aesthetic background.

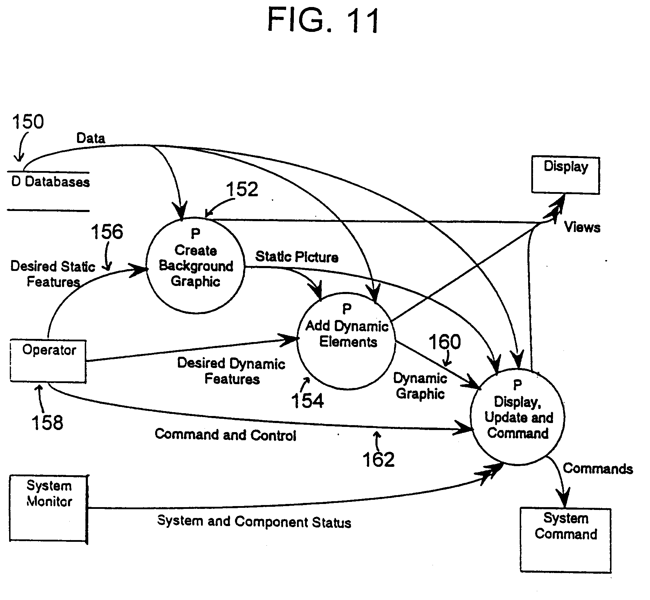

The data and command flows for creating a dynamic control including a static background picture are now explained with reference to FIG. 11. In particular, a database 150 contains data for creating one or more static background pictures 152 and one or more composite graphics 154 which include one or more independently selectable graphic control objects. In process step 156 (shown by an arrow), an operator 158 elects to create a background graphic by selecting a static picture from among the pictures stored in the database 150. In the next process step (block 160), the operator selects a desired composite graphic to be overlaid on the background pictures, and creates a dynamic graphic by associating selected ones of the independently selectable objects with desired control points. Moreover, the operator selects desired dynamic features including alarm and display characteristics for each associated object. In the final process step (block 162), the operator 158 commands and controls selected ones of the associated control points using the dynamic graphic.

According to yet another aspect of the present invention, each independently selectable graphic object is a separate OCX control composed of one or more dynamic sub-objects. The implementation of each graphic object as a separate OCX control facilitates the development of modular controls. Additionally, this aspect of the present invention enables a faster refresh response, since an individual graphic object may be refreshed, independent of the background and the other graphic objects.

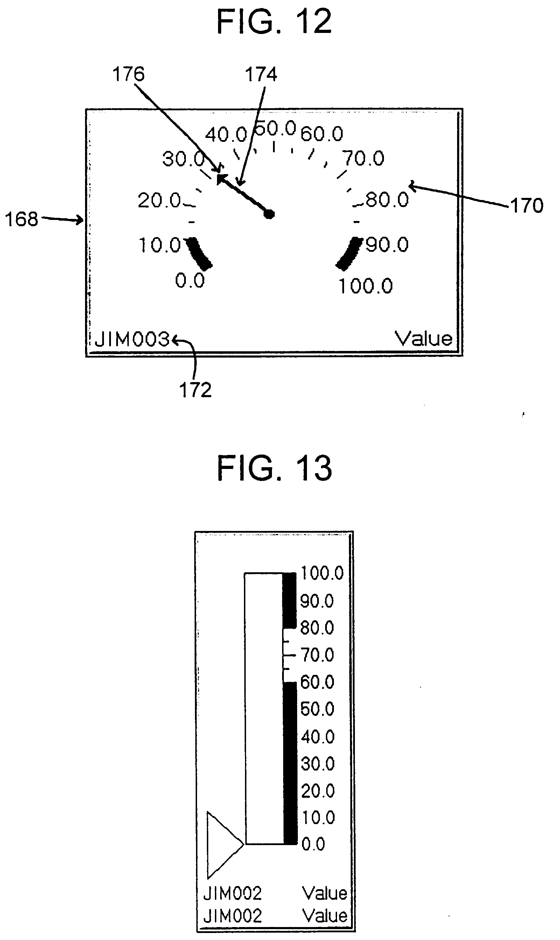

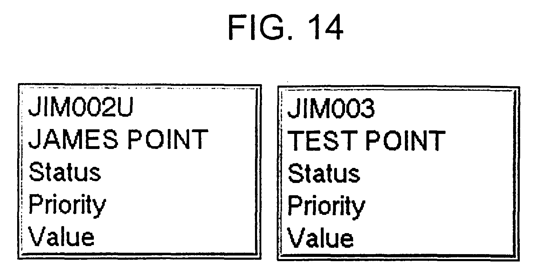

A second embodiment of the graphical display method of the present invention is now described with reference to FIGS. 12 - 15. Briefly, there are three types of controls which can be utilized to dynamically display run time values and state information according to the second embodiment of the present information. Namely, a needle gauge control, analog bar control, and point information block. A needle gauge control according to the present invention is shown in FIG. 12, an analog bar control is shown in FIG. 13, and a point information block control is shown in FIG. 14.

These controls are distinguishable from prior art building automation controls in several aspects. One of these aspects pertains to the modularity of the controls. Specifically, each of the controls of the present invention is a separate OCX stored in an individual data file. A user can elect which control points are monitored, and can specify the type of control used to monitor the control point. Further, each instance of a control is independent of other controls, with each control being refreshed, as needed, during its own processing cycle. In other words, the OCX controls of the present invention are independently and dynamically updated in a multi-threading environment.

More particularly, each control is an object composed of static and dynamic sub-objects. Static sub-object are those parts of the object which are not refreshed or repainted during a refresh cycle. By manner of illustration, in the needle gauge control 168 of FIG. 13, the scale 170, and control point name 172 are static sub-objects. In contrast, the arrow segment 174 and arrow head 176 are dynamic sub-objects because they are dynamically refreshed to reflect the current run time values of the control point. The independence of the static sub-objects from the dynamic sub-objects according to the present invention facilitates rapid multi-threading operations as processing resources during each processing cycle need only be utilized to refresh the dynamic sub-objects.

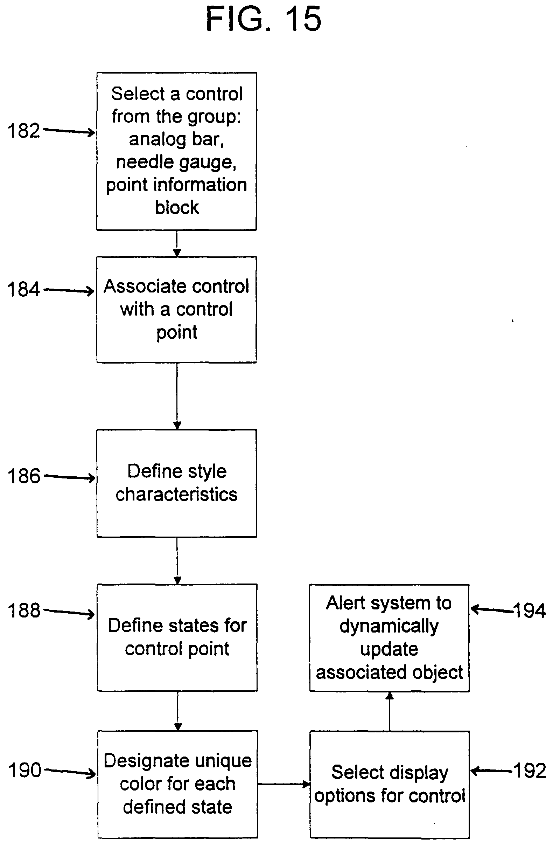

A method of creating a dynamic control will now be explained with reference to FIG. 15. This method closely parallels the method of creating an associated object control, the main difference being the customizable options associated with each individual control.

The user selects a needle gauge, for example, from the group including needle gauge, analog bar, and point information block (block 182). Next the user selects a point to be linked or associated with the control (block 184).

Subsequently, the style characteristics for the selected control are specified (block 186). The ability of the user to modify the style and display options of each type of control is another important feature of the present invention. In contrast, prior art graphical controls in building automation systems were inflexible because the various style and display characteristics were coded into the graphical display program. Thus, modifying the size of a prior art control would require programming changes. In contrast, style and display characteristics of a control according to the present invention can be modified by a user without requiring programming changes.

For example, FIG. 5 shows an operator interface 82 for setting style characteristics for a needle gauge. Using the operator interface 82, the user elects whether to show an arrow head and/or the pivot point of the needle. Moreover, the user specifies the direction of rotation, pivot position, as well as the maximum and minimum needle deflection (in degrees).

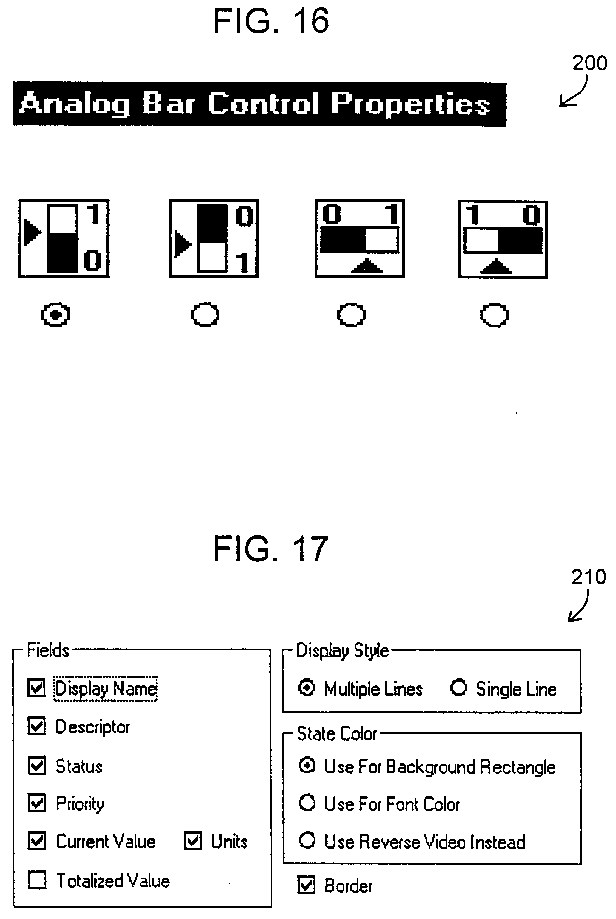

In contrast, if the selected control was an analog bar, then the user would be able to select the orientation of the bar (block 186). For example, FIG. 16 shows an operator interface 200 wherein the user can choose a horizontally oriented analog bar or a vertically oriented bar. Further, the user can elect the direction in which bar will deflect. Thus, for a horizontally oriented bar, the user chooses whether the bar will increase to the left or to the right, and for a vertically oriented bar, the user chooses whether the bar will increase in an upward or downward direction.

Still further, if the type of control was a point information block, then in step 186, the user can select various style characteristics using an operator interface 210 (FIG. 17). Among other things, the user can elect whether to display the name of the associated control point, a descriptor, its status, and its alarm priority.

Then, in step 188, the user defines the state(s) for the control point, and specifies a unique color corresponding to each state. Thus, in addition to dynamically displaying run time values for a control point, state information is displayed using the colors associated with each state.

The user then selects display options for the selected control; such as a title, to be displayed, whether to display the associated point name and alarm marks, as well as specifying the axis labels and associated fonts (block 190). Next, the user selects the state colors used for displaying each of the states which the control point can assume (block 192).

Finally, the state of the linked point is dynamically displayed by refreshing the dynamic-sub-objects in accordance with the specified alarm characteristics and run time values (block 194).

As discussed above, a user has the ability to specify the alarm state characteristics for each type of control. Thus, a user can specify that the color of the control change color to reflect the alarm state of the control point in addition to showing the actual run time value via needle deflection or displacement of the analog bar.

From the foregoing, it should be appreciated that a modular graphical display method for monitoring and controlling dynamic process information in a building automation system, which utilizes reusable control objects for graphically displaying real-time process state information has been shown and described. It should be further be appreciated that a building automation control system utilizing this modular graphical display method has been shown and described.

While various embodiments of the present invention have been shown and described, it should be understood that other modifications, substitutions and alternatives may be apparent to one of ordinary skill in the art. Such modifications, substitutions and alternatives can be made without departing from the spirit and scope of the invention, which should be determined from the appended claims.

Various features of the invention are set forth in the appended claims. Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A modular graphical display method for monitoring and controlling dynamic process information in a building automation system, comprising:
selecting a displayed graphic object from among a plurality of independent graphic objects;
linking said selected object with a control point;
defining a normal state and at least one alarm state for said control point;
assigning a state characteristics corresponding to each of said defined states; and
dynamically displaying the state of said control point using said alarm characteristics.

2. A modular graphical display method according to claim 1 wherein said state characteristics are selected using a state color table.

3. A modular graphical display method according to claim 2 wherein said alarm characteristics include displayed text and blinking said graphic object.

4. A modular graphical display method according to claim 1 wherein said graphic object is overlaid over a static background picture.

5. A modular graphical display method according to claim 1 wherein each said independent graphic object is an OCX control.

6. A modular graphical display method for monitoring and controlling dynamic process information in a building automation system, comprising:
selecting a displayed graphic object from the group comprising an information block control, an analog bar control, and a gauge needle control, said selected graphic object comprising at least one static sub-object and at least one dynamic sub-object;
specifying style characteristics for said selected graphic object;
linking said selected object with a control point;
defining a normal state and at least one alarm state for said control point;
assigning state characteristics to each said defined state; and
dynamically displaying run time values and state information of said control point by refreshing said dynamic-sub-objects in accordance with said state characteristics.

7. A modular graphical display method according to claim 6 wherein said graphic object is an analog bar and includes a caret for commanding said linked point, said caret being a dynamic sub-object.

8. A modular graphical display method according to claim 7 wherein said caret is moveable only if a user profile indicates that a user may command said linked point.

9. A modular graphical display method according to claim 7 wherein said analog bar has user adjustable attributes including bar orientation, size, scale, and alarm limit.

10. A modular graphical display method according to claim 6 wherein said graphic object is capable of being navigated to a point commander for commanding the state of said point.

11. A building automation control system, comprising:
at least one environmental control device;
a supervisory control station including a CPU, memory means for storing data, communications means for sending and receiving data to and from said environmental control device, display means for displaying graphical information, and an input unit, said supervisory control station receiving real-time process state information for at least one control point from said environmental control device;
at least one control object for graphically displaying said real-time process state information for a selected said one control point;
said memory means storing a dynamic link library (DLL) for each said at least one control object, said DLL containing:
first data for defining each of plural services as one or more OLE objects each said OLE object supporting one or more interfaces, each said interface including a number of methods, said methods being callable only by invoking said OLE object's interface;
second data for displaying at least one independently selectable graphical object;
link data specifying an association between said graphic object and said control point;
a state table containing user selectable change of state information for graphically displaying a change of state for said control point; and
style data specifying optional, user selected preferences including at least one of displayed fields, position, and size;
wherein said control station dynamically displays said received real-time process state information for said control point using said state table data, said link data and said first data.

12. A building automation control system according to claim 11 wherein each said graphic object is comprised of graphic sub-objects selected from the group of static sub-objects and dynamic sub-objects, said dynamic sub-objects being capable of being refreshed independent of said static sub-objects;
said state table data including data for each state which said dynamic sub-objects can assume.

13. A building automation control system according to claim 11 further comprising:
data for displaying a static background graphic stored in said memory;
wherein said display means displays at least one graphic object overlaid on said static background graphic, said graphic object being addressed and refreshed independent of said static background graphic.

14. A building automation control system according to claim 11 further comprising:
hyper-link data specifying an associated graphic object;
wherein said display means displays at least one graphic object overlaid on said static background graphic, said graphic object being addressed and selected independent of said static background graphic.

15. A building automation control system according to claim 11 wherein said control object is an analog control, and said DLL further comprises:
analog bar style data specifying the orientation of said analog control, alarm marks, axis labels, point name, and high and low tick numbers specifying the displayed range of values for said control point.

16. A building automation control system according to claim 11 wherein said control object is a needle gauge control, and said DLL further comprises:
analog bar style data specifying the orientation, size and position of said needle gauge control.

17. A building automation control system according to claim 16 wherein said DLL further comprises data specifying a selected needle style from among a plurality of needles styles.
